# EUROPEAN PATENT APPLICATION

(11) **EP 4 679 139 A1**
(43) Date of publication of application: **14.01.2026**
(21) Application number: 24020234.1
(22) Date of filing: 10.07.2024
(51) Int. Cl.: G01T 1/20

(54) **METHOD OF CONNECTING OPTICAL FIBER WITH SCINTILLATOR**

(71) Applicant: Narodowy Instytut Onkologii im. Marii Sklodowskiej-Curie Panstwowy Instytut Badawczy - Oddzial W Krakowie, 31-115 Kraków (PL)
(72) Inventor: Kabat, Damian, 31-315 Kraków (PL); Kulig, Dagmara, 32-084 Morawica (PL); Kaplon, Lukasz, 30-838 Kraków (PL); Hajduga, Jakub, 44-340 Godów (PL); Moskal, Gabriel, 32-061 Czulówek (PL); Rucinski, Antoni, 32-085 Modlnica (PL)
(74) Representative: Radlowski, Jakub

(57) **Abstract**

A method of connecting an optical fiber to a scintillator, where a centrally positioned isocentric hole with a circular cross-section is created in the scintillator, consisting of two sections: a shallower section with a diameter D1 that is at least 30% larger than the diameter of the optical fiber, and a deeper section with a smaller diameter D2 matching the core diameter of the optical fiber plus an additional 0.1 - 0.2 mm. The total depth of the isocentric hole constitutes 15 - 30% of the scintillator's height. An optical fiber, polished to an optical-quality finish, is inserted into the hole and adhesively bonded to the scintillator using an optical adhesive with a refractive index close to that of the scintillator and optical fiber, ideally between 1.56 and 1.58.

## Description

The invention concerns a method of connecting an optical fiber to a scintillator, mainly for use in ionizing radiation dosimetry and imaging diagnostics. The prior art includes various scintillators and methods for connecting them to optical fiber cables for applications such as ionizing radiation dosimetry and imaging diagnostics. The technical literature describes a scintillator-optical fiber connection using a wavelength-shifting (WLS) fiber, as outlined in a scientific article published in the *Journal of Nuclear Science and Technology* (Vol. 33, No. 5, pp. 381-389, May 1996). In this example, an NaI(Tl) scintillator and a plastic scintillator were coupled with an optical fiber through a WLS fiber with a shape matching that of the optical fiber, which absorbed blue light from the scintillator and emitted green light toward the optical fiber. The WLS was designed to capture light either from the side of the scintillator or through a hole drilled across the scintillator's entire volume. The green light from the WLS fiber experiences lower attenuation in the optical fiber than the blue light emitted by the scintillator. Using the selected WLS fibers allowed light to be collected from a larger scintillator volume, thus enhancing the efficiency of light signal detection.

Another approach, described in *IEEE Transactions on Nuclear Science* (Volume: 43, Issue: 3, pp. 2053 - 2060, June 1996), involved coupling a plastic scintillator (BC-404) or an inorganic disk-shaped scintillator (CaF2(Eu)) with a bundle of optical fibers. The efficiency of such an arrangement depended on the type of light-reflective material applied to the scintillator and the scintillator's thickness.

In European patent EP0604947B1 titled "Radiation-detecting light-transmission apparatus," a radiation detection device is described that may consist of a scintillator (especially a columnar one), a fluorescent fiber, which is introduced (preferably coaxially) into the scintillator with one end extending beyond it. Both elements can be coated with a light-reflective material. An optical connector is positioned between the end of the fluorescent fiber and the optical fiber.

In the international patent application published under WO2013027069A2, titled "Apparatus and method for radiation detection," a device and method for radiation detection are described. The device functions as a converter comprising an inorganic scintillator (e.g., made from zinc sulfide) that absorbs incident neutrons and emits photons, a light-receiving element that shifts the wavelength of the emitted light and directs it to the optical fiber, and at least one photodetector that receives light pulses from the optical fiber and converts them into electrical signals. The scintillator may be coated with a layer that reflects light internally. Additionally, the detector body may contain an organic scintillator, particularly made from POP or POPOP (1,4-bis(5-phenyl-2-oxazolyl)benzene).

In European patent application EP0655424, titled "Method of bonding two optical surfaces together, optical assembly thus formed, and particle-optical apparatus comprising such an assembly," a method for bonding two optical surfaces is described. In the initial phase, both surfaces are shaped to complement each other and undergo polishing treatment before being positioned for bonding. The surfaces are cleaned and polished, then joined without any intermediate material (e.g., adhesive) and subsequently undergo heat treatment at a temperature above the melting point but below the softening temperature of the materials being bonded. These materials may include composite materials, such as optical fiber ends. The dependent claims include various dependencies based on the relative hardness of materials on the Knoop scale. The polishing agent may consist of an alkaline solution of nanoparticles, silicon oxide, water, and glycerin. One of the bonded materials may be scintillation material (e.g., yttrium aluminum garnet (YAG) doped with terbium or cerium). One embodiment includes bonding a scintillation plate with an optical fiber plane, where both surfaces are optically polished.

In Polish patent application no. PL440433(A), titled "Scintillation Detector," a scintillation detector is presented, characterized by its construction with a coincidence circuit generating the detector's output signal, two amplification circuits, a scintillator plate with two grooves matched to the diameter of the optical fibers. The optical fibers are placed in these grooves, and optical contact is provided by silicone gel. At one end of each optical fiber, a SiPM photomultiplier is mounted, and the entire setup is wrapped in synthetic white material, Tyvek or similar, and additionally shielded from external light with thick aluminum foil and black, opaque paper.

In international application WO2011159911A2, titled "Radiation detection system including a scintillating material and an optical fiber and method of using the same," a radiation detection system is disclosed, which includes: a scintillating material that generates light in response to radiation; a first and a second optical fiber coupled to the scintillating material; and a fluid placed between the first and second optical fibers. This fluid may contain gas, particularly air, and may also include a silica aerogel and/or a non-Newtonian liquid. The fluid (aerogel) preferably has a refractive index lower than that of the optical fiber cores. Optionally, the core of the first or second optical fiber may include polystyrene, polyvinyltoluene, polyacrylate, or any combination thereof. The use of copolymers as scintillators, especially PVT, PMMA, polystyrene, and others, is therefore known in the prior art. Claims 26-28 of the cited application discuss various fiber homogeneity factors (expressed as percentages) in light collection. Variants are also described where an optical coupling material and/or adhesive material is placed between the scintillating material and the optical fibers. These materials may be in direct optical contact with the fibers. The coupling material may have a refractive index lower than that of the optical fiber (in particular, less than 1.50, see claim 44). The coupling or adhesive material may contain a polymer (e.g., polyacrylate, polyvinyltoluene, polyvinyl alcohol, poly(vinyl butyral)) or silicone rubber. An adhesive layer may be placed between the optical coupling material and the fiber end, with a refractive index lower than that of the fiber core. The feature of coaxial insertion of the optical fiber into the scintillator is also disclosed.

This invention relates specifically to a method of connecting an optical fiber to a scintillator, particularly certain types of scintillators.

In the method according to the invention, a hole with varying diameter is created in the scintillator body, consisting of two coaxially drilled, circular holes with different diameters and depths. The first circular hole is drilled to a depth H1, which is greater than the diameter of the optical fiber core, using a drill bit with a diameter D1 that is also at least 30% larger than the fiber core diameter. Subsequently, a second, coaxial hole is drilled within this first hole, with a depth H2 greater than depth H1 and a diameter D2 smaller than D1. The diameter D2 of the second hole matches the core diameter of the optical fiber plus an allowance of 0.1 - 0.2 mm. This design results in a gap with a width of 0.05 - 0.1 mm between the optical fiber and the wall of the second hole along the entire circumference when the fiber is inserted into the deeper, narrower hole.

The first and second holes together form an isocentric hole in the scintillator and can be drilled using flat-ended bits (milling cutters) or bits with a cone-like end. With flat-ended bits, the first hole takes the form of a cylinder drilled into the scintillator, as does the second, with the second hole being a narrower cylinder at the bottom of the first. When a cone-tipped drill is used, the base of the cylindrical first hole is inclined inward and transitions into the narrower second hole, which has a conical base.

After creating the isocentric hole (composed of the first and second holes), the optical fiber is prepared for connection to the scintillator. The fiber is a single strand or bundle of light-conducting fibers with a round cross-section. If the base of the second hole is flat, the fiber is cut perpendicularly to its longitudinal axis; if the base of the second hole is conical, the cone must be filled with optical gel, or the end of the fiber can be shaped into a cone using a dedicated grinder or lathe so that the angle matches the conical base of the second hole.

The cut fiber end is placed in a holder, and if the fiber is jacketed, the insulation is removed from the end section, exposing the core. The insulation is preferably removed in two phases. In the first phase, insulation is stripped from the portion extending above the holder's plane (preferably at least 3 mm above the holder's surface), exposing the optical fiber strands. The exposed fiber segment is then polished to optical quality. If the fiber end is flat, polishing is done under a water flow, using a "figure-eight" motion and sandpaper or abrasive disks with successively finer grit (preferably 800, 1200, 2000, 3000, 5000, and 7000 grit). Afterward, the fiber end is polished with a water-based polishing paste. If the fiber end is conical, polishing is conducted under water flow with diamond-tipped conical drills of similar grit to that of the abrasive paper or disks, and finished with a water-based polishing paste.

In the second phase, after polishing the fiber end to optical quality, the insulation is removed along a length equal to the depth H2 of the second hole. This way, the entire fiber section inserted into the scintillator is free of external cladding, allowing light from the scintillator to penetrate the fiber both from the polished cross-section (front or cone) and from the side surface of the fiber along the uncoated section inserted into the scintillator. The scintillator preferably has a cubic, cuboid, cylindrical, spherical, or shape approximating one of these. The width of the scintillator body along the section where the fiber is inserted should preferably be at least three times the diameter of the fiber core.

The depth H2 of the second hole in the scintillator is preferably between 5% and 30% of the height of the scintillator body, which improves the transfer of light from the scintillator to the optical fiber. This light transfer occurs both from the end face of the fiber and through its outer lateral surface, with transfer efficiency being higher from the fiber end face. Therefore, the fiber should not be embedded too deeply in the scintillator. In the method described, a small amount of epoxy optical adhesive is applied to the second, deeper hole with a smaller diameter, ideally with a refractive index closely matching that of both the scintillator and the optical fiber. These refractive indices depend on the type of scintillator and optical fiber but generally range between 1.4 and 1.6, with an optimal epoxy adhesive refractive index between 1.56 and 1.58.

Next, the stripped core of the optical fiber is inserted into the second, deeper hole until the fiber surface meets the bottom of the hole in the scintillator. At this stage, a small amount of optical adhesive should seep from the deeper hole into the bottom of the larger-diameter first hole. The space between the fiber surface and the walls of the first, shallower hole is then filled with optical adhesive, thus fully occupying the unfilled space within the holes in the scintillator.

The larger amount of optical adhesive within the shallower, wider first hole provides flexibility for the optical fiber, which is subject to bending and shearing forces during operation of the fiber-scintillator assembly. In the case where only a single diameter hole slightly larger than the fiber diameter is created in the scintillator, these forces often cause damage to the fiber at the point where it connects with the scintillator body.

In a preferred embodiment of the method, the external surface of the scintillator, including the area where the optical fiber is introduced, is coated with a light-reflective optical material to reflect light emitted by the scintillator. This coating is preferably a titanium dioxide-based white paint, barium sulfate-based white paint, Teflon tape, Enhanced Specular Reflector (ESR) film, Tyvek film, Mylar film, or another similar material.

In an example embodiment of the invention, a polymer scintillator based on polyvinyltoluene (PVT), polystyrene (PS), or poly(methyl methacrylate) (PMMA) is fabricated via mold casting and bulk radical polymerization (without using solvents other than liquid monomers such as vinyltoluene, styrene, methyl methacrylate, or their derivatives). The scintillator is shaped as a 10 mm x 10 mm x 10 mm cube. A central circular first hole is drilled with a diameter D1 of 0.85 mm and a depth H1 of 1 mm. Within the lower part of the first hole, a coaxial second hole is drilled with a diameter D2 of 0.6 mm and a depth H2 of 2 mm (measured from the scintillator surface plane). Both holes are drilled with a cone-tipped bit, so that the bottom of the first hole inclines inward and the bottom of the second hole has a conical shape.

Next, an optical fiber with a silica core of 0.5 mm thickness in a plastic lightproof cladding has its cladding stripped over a length of approximately 5 mm using a precision insulation stripper. The fiber with the exposed core is placed in a polymer polishing holder, clamped to secure the fiber's position. The exposed core should extend at least 3 mm above the upper plane of the holder. The exposed core is then polished (preferably under water flow) using a specialized diamond-coated conical drill with abrasive grades of 800, followed sequentially by 1200, 2000, 3000, 5000, and 7000, to achieve a conical shape with an opening angle close to that of the cone at the bottom of the second hole in the scintillator (± 2°). The polished fiber core end is then smoothed with a water-based polishing paste. After polishing, the stripped fiber core section should measure between 2 mm and 2.2 mm in length.

In the next step, a small amount of epoxy optical adhesive with a refractive index of 1.57 is applied inside the second, deeper hole, and the exposed fiber core end is inserted to the bottom of the hole, causing any excess adhesive to flow from between the fiber and the edge of the second hole into the first, shallower hole. The entire space between the fiber core and the walls of the first, wider hole is then filled with the same epoxy adhesive, and the scintillator with the optical fiber is stabilized in position until the adhesive fully cures.

In the final stage, the external surface of the scintillator-optical fiber connection, along with the entire side of the cubic scintillator where the hole is drilled, is coated with titanium dioxide-based white paint.

In another embodiment of the invention, the scintillator is a polymer scintillator based on light-curing resins such as bisphenol A ethoxylate dimethacrylate or bisphenol fluorene diacrylates, manufactured through 3D printing (digital light processing), which involves the radical photopolymerization of scintillator layers using ultraviolet light. The resulting scintillator is spherical with a radius of 9 mm.

A first, centrally positioned circular hole with a diameter D1 of 2 mm and a depth H1 of 2 mm is drilled in the scintillator. A second, coaxial circular hole with a diameter D2 of 1 mm and a depth H2 of 2 mm (measured from the bottom of the first hole, totaling 4 mm from the surface of the spherical scintillator) is drilled within the lower part of the first hole. Both holes are drilled with a flat-ended bit, resulting in cylindrical shapes for each hole.

A polymer optical fiber with a core made of poly(methyl methacrylate) and a core thickness of 0.9 mm, in a lightproof plastic cladding, has its cladding stripped over a length of approximately 7 mm using a precision insulation stripper. The fiber with the exposed core is placed in a polymer polishing holder, clamped to secure its position, with the exposed core extending at least 3 mm above the holder's upper surface. The exposed core is then polished (preferably under water flow) using abrasive paper with sequential grades of 800, 1200, 2000, 3000, 5000, and finally 7000, achieving a flat fiber end. The polished core end is then smoothed with a water-based polishing paste. After polishing, the stripped core section of the fiber should measure between 3.9 and 4.1 mm in length.

A small amount of epoxy optical adhesive with a refractive index of 1.4 is then introduced into the second, deeper hole, followed by inserting the exposed fiber core to the end of the hole, allowing excess adhesive to seep from between the fiber and the edges of the second hole into the first, shallower and wider hole. The space between the fiber core and the edges of the first, wider hole is then filled with the same epoxy adhesive so that a small amount of adhesive slightly rises above the scintillator surface, forming a raised area around the fiber's outer coating. The scintillator with the optical fiber should be stabilized until the adhesive fully cures.

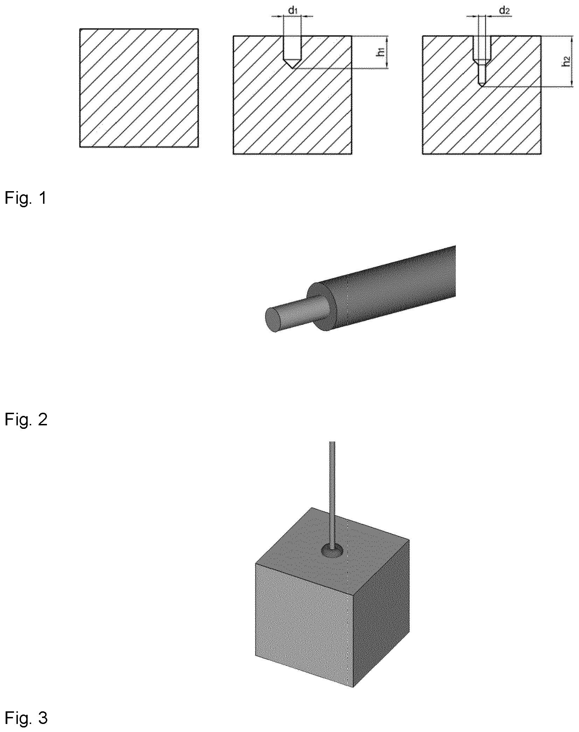

In the drawing labeled as fig. 1, a side cross-section of the cubic scintillator is shown (on the left), first with the initial hole formed with a conical shape at the bottom, followed by the second, deeper hole into which the optical fiber is inserted (on the right).

In fig. 2, an axonometric view displays the flat-polished optical fiber with exposed insulation.

Fig. 3 shows the scintillator with the inserted optical fiber and the visible epoxy adhesive bulge.

The described method for connecting an optical fiber to a scintillator enables a high-quality, stable connection that ensures an excellent light transmission coefficient for light waves generated in the scintillator through the optical fiber to the electronics module of a diagnostic device. This connection is durable and helps minimize or even eliminate the risk of fiber breakage at the point of entry into the scintillator body. The method is applied primarily in radiation detection solutions, especially in devices for imaging diagnostics or ionizing radiation dosimetry, notably in oncology.

## Claims

1. A method for connecting an optical fiber to a scintillator, in which a centrally positioned hole is created in the scintillator to receive an optical-quality polished fiber, where the scintillator and fiber are bonded with an adhesive or optical gel with a refractive index close to that of both the scintillator and optical fiber, **characterized in that** the scintillator includes an isocentric circular hole composed of: a first section with a diameter D1 at least 30% larger than the fiber diameter and a depth H1 greater than the fiber diameter; and a second section with a diameter D2 corresponding to the optical fiber core diameter plus 0.1 - 0.2 mm and a depth H2 greater than depth H1, where the total depth of H1 + H2 is 15 - 30% of the scintillator's height, and a small amount of optical adhesive is then introduced into this hole, followed by insertion of the fiber core, and the space between the fiber core and the walls of the first section is filled with optical adhesive until fully occupied.

2. The method for connecting an optical fiber to a scintillator according to claim 1, **characterized in that**, before polishing, the insulating cladding is removed from the fiber end over a length of H1 + H2 + at least 3 mm, after which the exposed fiber core section is placed in a polymer holder and polished using sandpaper or a conical cutter with sequential grits of 800, 1200, 2000, 3000, 5000, and 7000 under water flow, followed by a final polish using a water-based polishing paste until optical quality is achieved.

3. The method for connecting an optical fiber to a scintillator according to any of the preceding claims, **characterized in that** the optical adhesive is an epoxy adhesive with a refractive index of 1.56 - 1.58.

4. The method for connecting an optical fiber to a scintillator according to any of the preceding claims, **characterized in that** the scintillator has the shape of a cube, cuboid, sphere, cylinder, or a body approximating one of these shapes, where the width of the scintillator body along the entire section where the fiber is inserted, or in the case of a spherical shape in the section below the bottom of the first hole at depth H1, it is at least three times the width of the fiber core.
